Europäisches Patentamt

European Patent Office

Office européen des brevets

(11) Publication number: **0 330 448**
**A1**

## (12) EUROPEAN PATENT APPLICATION

(21) Application number: **89301720.2**

(22) Date of filing: **22.02.89**

(51) Int. Cl.⁴: **G 01 D 5/251**

(30) Priority: **24.02.88 GB 8804340**

(43) Date of publication of application:
**30.08.89 Bulletin 89/35**

(84) Designated Contracting States: **DE ES FR IT SE**

(71) Applicant: **MARCONI ELECTRONIC DEVICES LIMITED**
**Doddington Road**
**Lincoln LN6 3LF (GB)**

(72) Inventor: **Watts, Colin Richard**
**11 Garraways Woodshaw**
**Wootton Bassett Wiltshire (GB)**

(74) Representative: **Hoste, Colin Francis**
**The General Electric Company p.l.c. Central Patent**
**Department (Wembley Office) Hirst Research Centre**
**East Lane**
**Wembley Middlesex, HA9 7PP (GB)**

(54) **Signalling systems.**

(57) A telemetry system in which signals from sensors (2) dispersed throughout a site are signalled to a central point (3), the signalling means being energised by way of a common two-wire path (11,12) and the signals being returned by way of a third wire (13).

Fig.2.

**Description**

**Signalling systems.**

The present invention relates to signalling systems.

In particular, although not exclusively, the invention is concerned with signalling systems for use in telemetry, where sensors or other means dispersed throughout a plant or site may provide information which is to be signalled to a central point, in order to enable efficient operation and maintenance of the plant.

According to one aspect of the present invention in a signalling system in which a plurality of remote stations are arranged to be energised in turn from a central station by way of a two-conductor path so as to effect the signalling in turn from said remote stations to said central station of information from said remote stations, said signalling is effected by way of a third conductor.

Preferably said signalling is effected by way of one conductor of said two-conductor path and said third conductor.

According to another aspect of the present invention in a signalling system in which information from a plurality of remote stations is to be signalled to a central station, there is provided a two-conductor path by way of which a first one of said remote stations is arranged to be energised from said central station, each said remote station includes means responsive to said energisation to effect signalling of information to said central station by way of a third conductor, and some at least of said remote stations include switching means to extend said two-conductor path to another of said remote stations such that information is arranged to be signalled to said central station from each of said remote stations in turn by way of said third conductor.

Said switching means may be connected in one only of said two conductors and the other of said two conductors utilised with said third conductor to effect said signalling.

Said switching means may be arranged to be responsive to a pulse signal received from said central station over said two-conductor path to extend said two-conductor path to another of said remote stations.

A signalling system in accordance with the present invention will now be described by way of example with reference to the accompanying drawing, of which:-

Figures 1 and 2 show parts of the system schematically, and

Figure 3 shows part of the system diagrammatically.

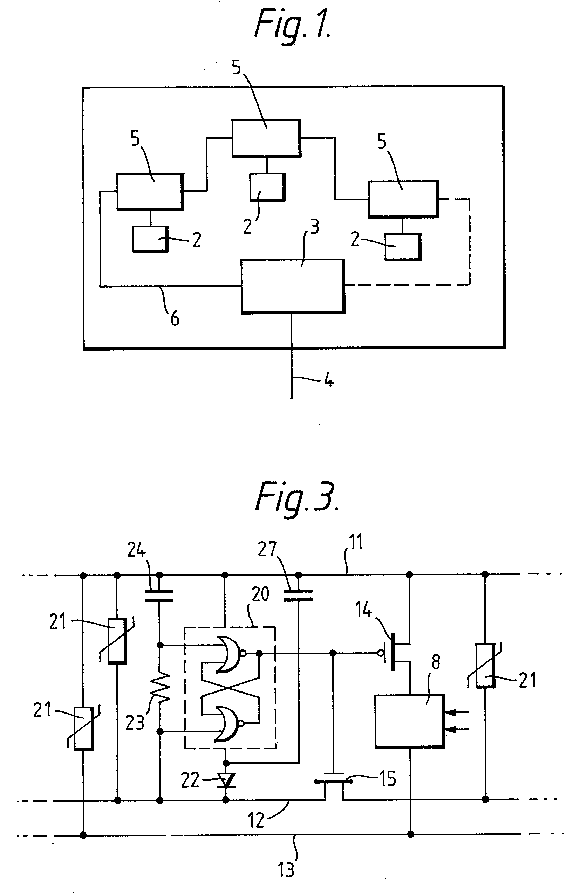

Referring first to Figure 1 the signalling system may be used for the purposes of telemetry within a plant or site represented by the outline 1, where information deriving from sensors 2 or other equipment distributed around the site may require either to be presented at a central control unit 3 or to be made available at that central control unit 3 for transmission to some other location over a transmission path 4. In order to convey the information to the central unit 3 each sensor 2 or other equipment is associated with a respective remote unit or module 5 of the signalling system, these remote units 5 being arranged to be linked in a chain to the central control unit 3 by way of a path 6.

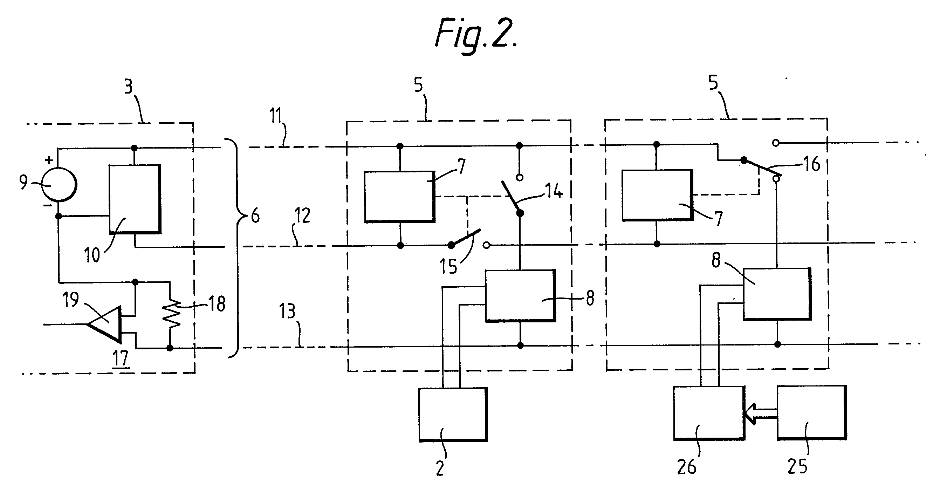

Referring now to Figure 2 each remote unit 5 comprises a two-state switch circuit 7 and a current-controlling circuit 8, which may be of the form sometimes known as a 4-20mA convertor. The central control unit 3 comprises a unidirectional voltage source 9 and a switch control circuit 10, one pole of the source 9 being directly connected to one conductor 11 of the path 6 and the other pole of the source being connected to another conductor 12 of the path 6 by way of the switch control circuit 10.

Each switch circuit 7 when energised has a first state in which the associated circuit 8 is connected between the conductor 11 and a third conductor 13, and a second state in which this connection is broken and the conductor 11 or the conductor 12 is connected to energise the next unit 5 in the chain. In one of the units 5 shown in Figure 2 these connections are shown as being effected by two separate sets of make contacts 14 and 15 respectively, while in the other unit 5 a single set of changeover contacts 16 is utilised to effect both connections.

As the respective circuits 8 of the units 5 are energised in turn a unidirectional current in the range from four to twenty milliamps, in dependence upon the value of a signal derived from a sensor 2 or other circuit, is passed by the circuit 8 in response to a unidirectional voltage applied between the conductors 11 and 13 from the source 9. The value of this unidirectional current is measured by a current measuring circuit 17 in the central control unit 3, the measuring circuit 17 comprising a series resistor 18 and amplifier means 19.

As shown in Figure 3 each switch circuit 7 may comprise a bistable circuit 20, outputs of which are applied to control field-effect transistor switches 14 and 15. Over-voltage protection devices 21 may be provided between the conductor 11 and the conductors 12 and 13, and a diode 22 may be connected in series in the energising path for the bistable circuit 20. A differentiating circuit comprising a resistor 23 and a capacitor 24 connected between the conductors 11 and 12 may be used to ensure that the bistable circuit 20 can be switched between its two states as required.

When the system is first energised the switch control circuit 10 applies to the conductor 12 a positive-going pulse of the order of tens of milliseconds duration such as to reduce the supply voltage between the conductors 11 and 12 to a low value. At the end of this long pulse the restoration of supply voltage between conductors 11 and 12 from the central control unit 3 brings the switch circuit 7 in the first module 5 of the chain into operation in the first state referred to above, with the bistable circuit 20, say, holding the transistor switch 14 conducting and the transistor switch 15 non-conducting.

Once the current value determined by the circuit 8, representing the information to be transmitted from the sensor 2 or other circuit, has been measured by the measuring circuit 17 at the central control unit 3 the switch control circuit 10 is arranged to apply a shorter positive-going pulse, of a duration of the order of, say, one millisecond which sets the switch circuit 7 to its second state. During this shorter pulse the bistable circuit 20 is energised from a reservoir capacitor 27, with the diode 22 reverse biassed. The energising voltage between the conductors 11 and 12 is thereby extended to the next module 5 in the chain by way of the switch 15, and from that module to the next in response to another short pulse. In this way each of the modules 5 is energised in turn to effect the transmission of information to the central control unit 3, without requiring individual addressing of the modules 5 from the unit 3. Any additional modules 5 may be plugged in, or modules may be removed, without disrupting the mode of operation, the identity of the respective modules 5 in the chain being merely a matter of rotation in software or in written record.

The sensors 2 may for example be thermocouples or resistance bridges, or may comprise, as shown in Figure 2, a pulse counter 25 coupled to a digital to analogue convertor 26.

Other forms of bistable circuit 20 may be used, and double-pole switch means (not shown) may replace the switch or contacts 14 such that a sensor 2 and its associated circuit 8 may be isolated except when information is to be transmitted.

Measurements transmitted by such a system may include temperature, liquid level, flow rate, degree of rotation, voltage, current, pressure, light intensity, etc. One or more dummy current sources may be included in the chain for the purposes of checking integrity and/or for calibration.

It will be appreciated that the positioning of switch contacts 15 only in the conductor 12 would enable the individual current measurements in respect of different modules 5 to be made by way of a path comprising continuous conductors 11 and 13 and the respective switch contact 14, so that the integrity of any one measurement would not be compromised by any number of intervening modules 5.

The path 6 may extend back to the central control unit 3, as indicated by the dashed line in Figure 1, ending, say, in a dummy unit by means of which the central unit may check for the completion of a signalling cycle. A looped path 6 also enables the return of information to the central control unit 3 from all modules 5 in the event of a break in the path at any point.

The current measurement may be carried out at the central control unit 3 both in the conductor 13, as shown in Figure 2, and in the conductor 11 (not shown), to enable rejection of noise signals induced in the conductors 11 and 13.

## Claims

1. A signalling system in which plurality of remote stations are arranged to be energised in turn from a central station by way of a two-conductor path so as to effect the signalling in turn from said remote stations to said central station of information from said remote stations, wherein said signalling is effected by way of a third conductor.

2. A signalling system in accordance with Claim 1 wherein said signalling is effected by way of one conductor of said two-conductor path and said third conductor.

3. A signalling system in which information from a plurality of remote stations is to be signalled to a central station, wherein there is provided a two-conductor path by way of which a first one of said remote stations is arranged to be energised from said central station, each said remote station includes means responsive to said energisation to effect signalling of information to said central station by way of a third conductor, and some at least of said remote stations include switching means to extend said two-conductor path to another of said remote stations such that information is arranged to be signalled to said central station from each of said remote stations in turn by way of said third conductor.

4. A signalling system in accordance with Claim 3 wherein said switching means is connected in one only of said two conductors and the other of said two conductors is utilised with said third conductor to effect said signalling.

5. A signalling system in accordance with Claim 3 or Claim 4 wherein said switching means is arranged to be responsive to a pulse signal received from said central station over said two-conductor path to extend said two-conductor path to another of said remote stations.

# Fig.1.

# Fig.3.

Fig.2.

EP 0 330 448 A1

## DOCUMENTS CONSIDERED TO BE RELEVANT

EP 89301720.2

| Category | Citation of document with indication, where appropriate, of relevant passages | Relevant to claim | CLASSIFICATION OF THE APPLICATION (Int. Cl.4) |
|---|---|---|---|
| X | DE - B - 2 160 080 (DANFOSS) <br> * Fig. 1 * <br> ---- | 1 | G 01 D 5/251 |

TECHNICAL FIELDS
SEARCHED (Int. Cl.4)

G 01 D 5/00

The present search report has been drawn up for all claims

| Place of search | Date of completion of the search | Examiner |
|---|---|---|
| VIENNA | 24-05-1989 | KUNZE |